# EUROPEAN PATENT APPLICATION

(11) **EP 3 299 520 A2**
(43) Date of publication of application: **28.03.2018**
(21) Application number: 17193456.5
(22) Date of filing: 27.09.2017
(51) Int. Cl.: E02B 3/10, C09K 17/00, C04B 28/26

(54) **STABILIZATION OF DIKES**

(30) Priority: 27.09.2016 EP 16190904
(71) Applicant: Kroeze Holding B.V., 4153 AM Beesd (NL)
(72) Inventor: KROEZE, Marcus Maria Petrus, 4153 AM Beesd (NL)
(74) Representative: De Vries & Metman

(57) **Abstract**

This invention aims to provide a new method of dike or dam stabilization. The method according to the invention does not require heavy equipment that might damage the dike or dam even further. Furthermore, the method according to the invention does not pose a threat to the environment since it does not involve the use of environmentally detrimental chemicals. To this end the invention is directed to a process for the stabilization of a dike or dam, wherein a dike or dam is injected with a waterglass composition. In one embodiment of the invention the waterglass composition is injected by means of an injection lance that is inserted practically vertically into the dike until it reaches into the sand layer underneath the dike. During injection the injection lance may be moved upwards, so that a vertical column is formed. Upon careful positioning of the injection lance multiple vertical columns may be formed connectively next to each other so as to form a screen.

The invention is further directed to a waterglass composition comprising an inorganic hardener, more particlularly a tras hardener that is very suitable to be used in the process according to the invention.

## Description

The present invention is directed to the stabilization of dikes or dams by means of injection with a waterglass composition. The invention is further directed to a specific waterglass composition suitable for dike stabilization.

### BACKGROUND

Dikes or dams are important to a lot of countries which either lie below sea level or have rivers or river deltas that are subject to flooding regularly. Therefore, maintenance of the dikes of dams and regular inspection on the quality of the dikes and dams is a requisite. A physical phenomenon that may affect the quality of the dike is the so-called "piping effect". This means that at the level between clay and sand layer, water flows underneath the dike and surfaces at the other side of the dike or dam as seepage water. During this process the water entrails sand from under the dike, so that the dike becomes unstable. There are some methods to repair for the piping effect, but they each have their disadvantages. Traditionally either dam walls or concrete pillars are installed, but these require heavy equipment, which would do even more damage to the dike. Also geotextile can be applied to the sides of the dikes. However, since piping usually occurs under the surface of the water and under the base of the dike, the use of geotextile is not always effective, and it cannot be considered a solution for the longer term. In for instance WO2007/41975 a protective wall is proposed. Said protective wall has a flat, tabular or cubic configuration which has a section of a water-impermeable building material. The building material of the protective wall is a compound of compacted, mineral aggregates and an organic adhesive.

In DE 102012106568 the injection into a dam or dike of a water-reactive gel is described. The gels described are polyurethane or acrylate based gels. It goes without saying that this solution is not desirable from environmental viewpoint.

### SUMMARY OF THE INVENTION

This invention aims to provide a new method of dike or dam stabilization. The method according to the invention does not require heavy equipment that might damage the dike or dam even further. Furthermore, the method according to the invention does not pose a threat to the environment since it does not involve the use of environmentally detrimental chemicals. To this end the invention is directed to a process for the stabilization of a dike or dam, wherein a dike or dam is injected with a waterglass composition. In one embodiment of the invention the waterglass composition is injected by means of an injection lance that is inserted practically vertically into the dike until it reaches into the sand layer underneath the dike. During injection the injection lance may be moved upwards, so that a vertical column is formed. Upon careful positioning of the injection lance multiple vertical columns may be formed connectively next to each other so as to form a screen.

The invention is further directed to a waterglass composition comprising an inorganic hardener, more particularly a tras hardener that is very suitable to be used in the process according to the invention.

### DETAILED DESCRIPTION OF THE INVENTION

The present invention is directed to a process for the stabilization of a dike or dam, wherein a dike or dam is injected with a waterglass composition. This method does not require heavy equipment that might damage the dike or dam even further. Furthermore, the method according to the invention does not pose a threat to the environment since it does not involve the use of environmentally detrimental chemicals. It was found that since this method may be conducted without causing vibrations and no setting tensions occur, the method can be used to dikes or dams that have been heavily damaged already, without the risk of collapsing.

A dike or dam is usually built up by a dike body with underneath the dike or dam, a layer of sand. Said sand layer usually expands to one or both sides of the dike body. A dike body usually consist of compacted earth or construction material with a firm, effectively rooted grass cover or of a mixture of various earth and construction materials. In the method according to the invention an injection lance is inserted into the dike until the injection point reaches or is within the sand layer that is present underneath the dyke, and waterglass is injected. The injection is optimally done at the site where the sand layer is readily reachable, thus usually at the side of or next to the dike body. Since the injection is done under low pressure minimal disturbance is posed on the underground. For comparison, with the method according to the invention pressures of between 1.5 to 40 bar are applied whereas in other soil handling techniques such as jet grouting pressures of above 100 bar applied.

Waterglass is a known material for use in construction and geotechnical applications. It is commercially available in various grades. It is available in liquid form but also in solid, powdered form. Waterglass mainly comprises sodium silicate, however also potassium silicate and lithium silicate may be present in the waterglass.

The injection lance may be a screw injection drill. These types of drills are described in, for instance NL1029541 or EP 371533, and are provided with an injection lance through which the waterglass composition may be led. The injection lance may also be provided with a screw blade extending around the lower end of the lance for easier penetrating the soil and adequate mixing of the soil and the waterglass composition. Optionally the injection lance is provided with a valve that can be opened and closed during operation.

In the method according to the invention the injection lance may be moved upwards during injection. In this way waterglass composition is injected to form a vertical column of injected soil. Upon hardening of the waterglass composition with the soil present, solid columns will form. Upon careful positioning of the injection lance, multiple vertical columns may be formed connectively next to each other so as to form a screen.

It will be clear that when performing the method according to the invention it is important that the hardening of the waterglass composition is carefully controlled. When the waterglass composition hardens too fast the injection lance may become clogged. In practice an operation window of at least 40 minutes is desired, more preferably at least 45 minutes. Therefore, in general a hardener may be added to the waterglass. Said hardener may be a known organic hardener for waterglass such as ethyl actetate, dibasic ester, monoacetin, triacetin, diacetin, propylene carbonate and several commercially available organic hardeners of proprietary composition such as R 100®, ex IMCD, which is a mixture of aliphatic esters. For the purpose of the present invention however inorganic hardeners are preferred both in view of environmental issues and in view of its suitability for the present application. Suitable inorganic hardeners are calcium chloride, calcium hydroxide, calcium bicarbonates, calcium dioxide, calcium oxdide, phosphates and combinations of inorganic oxides such as are present in pozzolans, etcetera. These hardeners may be added to the waterglass as a solid (optionally in powdered form), as a liquid, a solution, or as a suspension.

It was found that when using pozzolan such as tras, the setting time could be optimally controlled. Tras is a conventional additive in the cement industry and is used as filler to increase the density of the cement. It is usually retrieved from quarries and readily available from producers of construction material. In addition to a better controlled setting time also syneresis from the final gel was prohibited or even absent, when using tras. Also the resulting gels appeared to have a very good water resistance when subjected to water proofing tests. In these tests the resulting gel is submerged in water and the mass decrease is measured.

The waterglass compositions are available in liquid form or in powdered form. When using a liquid form waterglass composition, the neutralization degree optimally is at least 60 % so as to ensure minimal syneresis and good waterproofing properties. When using a water glass composition in liquid form, both an organic hardener or inorganic hardener may be used.

The amount of organic hardener present in the waterglass composition may vary from 1 to 3.6 mol. %, preferably 3.0 to 3.6 mol. % based on the molar amount of waterglass. When using liquid R100® this amounts to 3-15 vol%, preferably from 6 to 12 vol. %, respectively based on the volume of the waterglass.

The liquid-form waterglass composition when injected may comprise water and waterglass in a volume/volume ratio of between 30:70 and 70:30, preferably between 40:60 and 60:40, most preferably about equal volumes of waterglass and water are used. When using liquid waterglass compositions usually an organic hardener is used.

The use of powered form waterglass composition is preferred for the present application. In that case also a hardener in solid form is preferred, more preferably a solid inorganic hardener. However also organic hardeners may be used when circumstances demand. Most preferred is the use of tras. The waterglass composition and hardener is mixed with water at the injection site and subsequently injected with the injection lance into the soil at a predetermined depth.

The waterglass composition in powdered- form may comprise a waterglass / inorganic hardener ratio of between 20:80 and 80:20 by weight, preferably between 30:70 and 70:30, more preferably between 40:60 and 60:40, most preferably about equal amounts of waterglass and hardener are used. The amount of water added upon injection may vary from 2 to 8 times the weight of the waterglass used, preferably about 6 times weight of the amount of waterglass is added. As mentioned above, tras is the preferred hardener in these powdered- form waterglass compositions and is optimally used in the ratio's given above.

It was found that the above described waterglass composition comprising waterglass and tras in the above-described ratio is also extremely suitable for use in other soil (horizontal) stabilization techniques such as the stabilization of building pits.

The invention is further illustrated by means of the following examples. These examples are merely for illustrative purposes and cannot be construed as limitative.

### EXAMPLES

### Example 1

Various gels were prepared according to the formulations given in TABLE 1 below. The resulting gels were tested on setting time, syneresis upon aging, strength, and waterproofing.

**TABLE 1: Setting times of various formulations**

| Formulation | Waterglass | | Hardener | | Water (kg)* | Neutralisation (%) | Setting time (min.) |
|---|---|---|---|---|---|---|---|
| | Liquid (1) | Powder (kg) | R100® (l) | Tras (kg) | | | |
| 1 | 110 | - | 12 | - | 110 | 40 | 45 |
| 2 | 76 | - | 12 | - | 155 | 58 | 90 |
| 3 | - | 50 | - | 50 | 150 | - | 60 |
| 4 | - | 40 | - | 60 | 150 | - | 85 |
| 5 | - | 30 | - | 70 | 150 | - | 85 |
| 6 | - | 30 | - | 70 | 100 | - | 110 |
| 7 | - | 36 | - | 54 | 150 | - | 70 |

| | | | | | | | |
|---|---|---|---|---|---|---|---|
| *) demiwater | | | | | | | |

These experiments show that when using powdered waterglass in combination with inorganic hardener such as tras the setting times can easily be set and optimized.

In TABLE 2 the syneresis (water loss) and strength upon 7 days of aging of the formulations given above have been compiled.

**TABLE 2: Syneresis and Strength upon 7 days of aging**

| Formulations | Syneresis (wt%) | Strength (Mpa) |
|---|---|---|
| 1 | 19.6 | Kind of hard gel |
| 2 | 11.0 | 0.05 |
| 3 | 0 | 0.30 |
| 4 | 0 | 0.15 |
| 5 | 0 | 0.05 |
| 6 | 0 | 0.10 |
| 7 | 0 | 0.10 |

These experiments show that when using powdered waterglass in combination with an inorganic hardener such as tras, syneresis can be avoided and an optimal strength is obtained.

In order to test the influence of salts in the water formulation 3 was also made with tap water. The mass difference upon aging over time was measured and compiled in TABLE 3.

**TABLE 3 mass decrease upon submersion in water of 20 °C**

| | Mass difference (wt%) | | | |
|---|---|---|---|---|
| Formulations | complete submersion | | | |
| | 14 days | 49 days | 238 days | 480 days |
| 3 | -2.1 | -0.4 | +0.3 | +0.6 |
| 3 (Tap water) | -2.3 | -0.3 | +0.3 | +0.6 |

These results show that the salts present in tap water do not really influence the stability. Both samples hardly gave any mass difference upon aging, showing the stability of this formulation.

### Example 2

In order to investigate the influence of the neutralization degree on the strength in liquid formulations. Various liquid waterglass formulations with various neutralization degrees were prepared and the strength was measured. The results are compiled in TABLE 4.

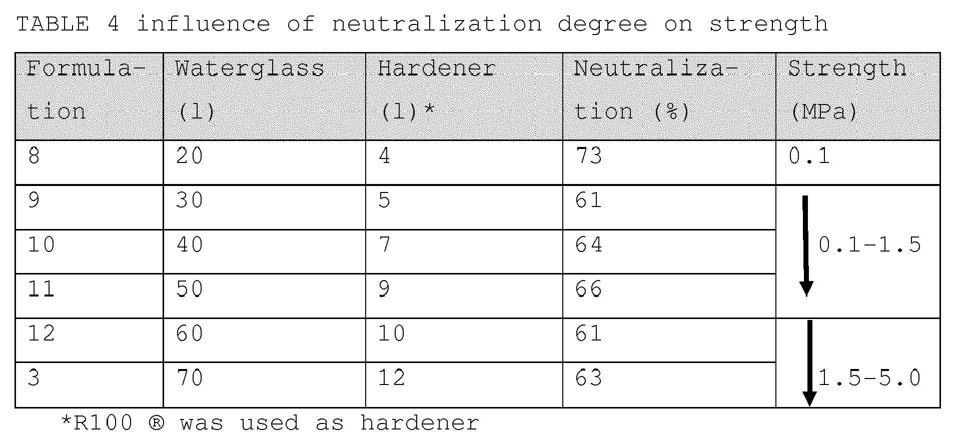

These experiments show that by increasing the neutralization degree to above 60 % the strength of the resulting gel may be increased to a suitable level.

Further, the waterproofing also increased upon higher neutralization degree.

In order to test the quality of the resulting gels of various formulas the mass decrease and solubility of gels upon submersion in water of 20 °C, for 7 and 14 days, respectively, was measured. The results are compiled in TABLE 5 and TABLE 6.

**TABLE 5 mass decrease upon submersion in water of 20 °C**

| | Mass decrease (wt%) | | | |
|---|---|---|---|---|
| Formulations | Partial Submersion | | complete submersion | |
| | 7 days | 14 days | 7 days | 14 days |
| 1 | 24.6 | 33.5 | 16.9 | 17.8 |
| 2 | 3.0 | 3.9 | 5.0 | 5.5 |
| 3 | 0 | 0 | 2.2 | 1.5 |
| 4 | 0.1 | 0 | 1.7 | 1.2 |
| 5 | 0.2 | 0.2 | 1.4 | 0.7 |

**TABLE 6 Solubility upon submersion in water of 20 °C**

| | Mass decrease (wt%) | | | |
|---|---|---|---|---|
| Formulations | Partial Submersion | | complete submersion | |
| | 7 days | 14 days | 7 days | 14 days |
| 1 | 3.1 | 2.9 | 10.4 | 10.8 |
| 2 | 0.5 | 0.7 | 2.2 | 2.4 |
| 3 | 0.8 | 0.8 | 2.2 | 2.2 |
| 4 | 0.5 | 0.6 | 1.5 | 1.5 |
| 5 | 0.4 | 0.4 | 1.1 | 1.1 |

### EXAMPLE 3

In order to test the stabilization with the method according to the invention, a construction pit was made with walls (screens) of columns of injected soil.

The average soil structure in the test location could be defined as follows:
- About 0.3m thick top layer, silt / clay sand;
- About 0.25 - 1.0m thick clay layer
- Below moderately coarse sand

The realized test pit has overall (internal) dimensions of 2.0 x 1.6 m².

The test walls were formed by injecting while vertically moving the screw injection drill. At the drill mast a double drill was placed with each drilling bit having a diameter of 0.45 m.

The drills have a mutual distance of approximately 0.7m. Thus, each time two columns are formed. In the subsequent step the drill position is moved so that columns are formed next to the just created columns (with a small overlap of approximately 0.1 m) so as to make a screen or wall. Finally, 24 columns were formed.

De injection depth was up to 5 m, while the drilling speed was kept at about 80 rpm, with a flow speed of about 30 1/min and a pressure of the grout was about 2 bar. The volume per column was about 640 liters, while the amount of binder used was between 208 and 227 liter per column.

The liquid tightness of the walls was measured by means of geo-electrical monitoring. In this technique an electrical field is applied outside of the pit, and any leakage of the pit wall will result in an increase of the electrical potential. These tests showed that the columns/walls of the construction pit prepared by waterglass injection were watertight.

## Claims

1. Process for the stabilization of dikes or dams wherein a dike or dam is injected with a waterglass composition.

2. Process according to claim 1 wherein the dike comprises a dike body and a sand layer expanding to one or both sides of the dike body.

3. Process according to claim 2, wherein an injection lance is inserted into the dike until the injection point reaches or is within the sand layer underneath the dike body, and waterglass composition is injected.

4. Process according to any one of claims 1-3, wherein during injection the injection lance is moved upwards.

5. Process according to claim 4, wherein vertical columns are formed by upward simultaneous injection and movement.

6. Process according to claim 5, wherein multiple vertical columns are formed connectively next to each other so as to form a screen.

7. Process according to any one of claims 1-6, wherein a hardener is present in the waterglass composition.

8. Process according to any one of claims 1-7, wherein the hardener is an inorganic hardener.

9. Process according to any one of the preceding claims, wherein a waterglass composition which comprises waterglass and inorganic hardener in a ratio of between 20:80 and 80:20 by weight, preferably between 30:70 and 70:30 by weight, more preferably between 40:60 and 60:40 by weight, is mixed with water and injected.

10. Process according to claim 8 or 9, wherein the inorganic hardener is tras.

11. Waterglass composition comprising waterglass and tras.

12. Waterglass composition according to claim 11 which comprises waterglass and tras in a ratio of between 20:80 and 80:20 by weight, preferably 30:70 and 70:30 by weight, more preferably between 40:60 and 60:40 by weight.

13. Waterglass composition according to claim 11 or 12 which is in powdered form.

14. Use of the waterglass composition according to any one of claims 12 and 13 for stabilization of soil.
